# EUROPEAN PATENT APPLICATION

(11) **EP 4 603 842 A1**
(43) Date of publication of application: **20.08.2025**
(21) Application number: 23877019.2
(22) Date of filing: 28.08.2023
(51) Int. Cl.: G01N 35/00

(54) **AUTOMATIC ANALYSIS DEVICE**

(30) Priority: 11.10.2022 JP 2022163077
(71) Applicant: HITACHI HIGH-TECH CORPORATION, Tokyo 105-6409 (JP)
(72) Inventor: SATO, Kakeru, Tokyo 105-6409 (JP); TAKAHASHI, Takuya, Tokyo 105-6409 (JP)
(74) Representative: MERH-IP Matias Erny Reichl Hoffmann Patentanwälte PartG mbB
(86) International application number: PCT/JP2023/031063
(87) International publication number: WO 2024/080011

(57) **Abstract**

An automatic analyzer with a water-cooled reagent cool storage case efficiently cools and dries an external air before discharging it into an inner space, thereby suppressing dew condensation in an unintended place. In the automatic analyzer with a reagent cool storage case that cools a reagent, the reagent cool storage case includes: a cooling water flow path that supplies cooling water to outside an inner wall comparting a space for housing a reagent container and cools the inner wall; and an air flow path that supplies air to inside the inner wall and makes the space have a positive pressure. A cooling water inflow hole is formed at a specified position of the lower surface of the cooling water flow path located under the bottom surface of the space, and a portion of the air flow path located on the upper surface of the inner wall comparting the bottom surface of the space is positioned on the vertical projection of the cooling water inflow hole.

## Description

### Technical Field

The present invention relates to an automatic analyzer including a reagent cool storage case.

### Background Art

The automatic analyzer causes a sample (specimen) such as blood or urine and a reagent to react with each other and optically and electrically detects the reaction between the sample and the reagent. In the automatic analyzer, the reagent used for the reaction is put into a reagent container, and the reagent container is arranged on a reagent disk or the like in a reagent cool storage case. An inner space of the reagent cool storage case is cooled at, for example, about 5 to 12°C to stably store the reagent.

In the reagent cool storage case, a through hole for reagent aspiration is generally provided for aspirating the reagent from the reagent container in the reagent cool storage case. When hot and humid external air flows into the reagent cool storage case via the through hole, a temperature in the reagent cool storage case increases and the external air flowed into the reagent cool storage case is cooled to the dew point or lower. As a result, there occurs a problem that dew condensation occurs. To solve such a problem, there is known a technique of suppressing an inflow of hot and humid external air via a through hole by introducing cooled external air into a reagent cool storage case and causing an internal pressure of the reagent cool storage case to be an atmospheric pressure or higher.

For example, PTL 1 describes a technique of introducing external air via an external air introduction path different from a through hole or a technique of directly cooling an inner wall of a reagent cool storage case using a cooling device such as a Peltier element. PTL 1 also discloses that the external air introduction path is provided along a bottom surface of the reagent cool storage case to immediately discharge dew condensation water generated by introducing the external air, and an external air discharge opening is formed toward a drain.

### Citation List

### Patent Literature

PTL 1: WO2021/182068A

### Summary of Invention

### Technical Problem

In the reagent cool storage case described in PTL 1, the external air introduction path is efficiently cooled by local temperature control using a cooling device, and thus dew condensation of moisture in the external air is likely to be promoted in the external air introduction path. That is, in the reagent cool storage case of PTL 1, dried external air is discharged to an inner space, and thus dew condensation is not likely to occur from the discharged external air. However, in the water-cooled reagent cool storage case using cooling water, the introduced external air is not likely to be cooled or dried. Therefore, there is a possibility that dew condensation caused by the external air discharged from the external air introduction path to the inner space cannot be completely suppressed.

An object of the invention is, even in an automatic analyzer with a water-cooled reagent cool storage case, to suppress dew condensation in an unintended place by efficiently cooling and drying an external air before discharging it into an inner space.

### Solution to Problem

To achieve the above-described object, according to the present invention, in the automatic analyzer with a reagent cool storage case that cools a reagent, the reagent cool storage case includes: a cooling water flow path that supplies cooling water to outside an inner wall comparting a space for housing a reagent container and cools the inner wall; and an air flow path that supplies air to inside the inner wall and makes the space have a positive pressure. A cooling water inflow hole is formed at a specified position of the lower surface of the cooling water flow path located under the bottom surface of the space, and a portion of the air flow path located on the upper surface of the inner wall comparting the bottom surface of the space is positioned on the vertical projection of the cooling water inflow hole.

### Advantageous Effects of Invention

According to the present invention, an automatic analyzer with a water-cooled reagent cool storage case can efficiently cool and dry an external air before discharging it into an inner space, thereby suppressing dew condensation in an unintended place.

### Brief Description of Drawings

[Fig. 1] Fig. 1 is a perspective view that shows the general configuration of an automatic analyzer according to the embodiment.
[Fig. 2] Fig. 2 is a vertical sectional view that schematically shows the structure of a reagent cool storage case according to the embodiment.
[Fig. 3] Fig. 3 is a horizontal sectional view that schematically shows the structure of a reagent cool storage case according to a first embodiment.
[Fig. 4] Fig. 4 is a horizontal sectional view that shows flows of cooling water and air and how dew condensation occurs, according to the first embodiment.
[Fig. 5] Fig. 5 is a horizontal sectional view that shows flows of cooling water and air and how dew condensation occurs, according to a second embodiment.
[Fig. 6] Fig. 6 is a horizontal sectional view that shows flows of cooling water and air and how dew condensation occurs, according to a third embodiment.

### Description of Embodiments

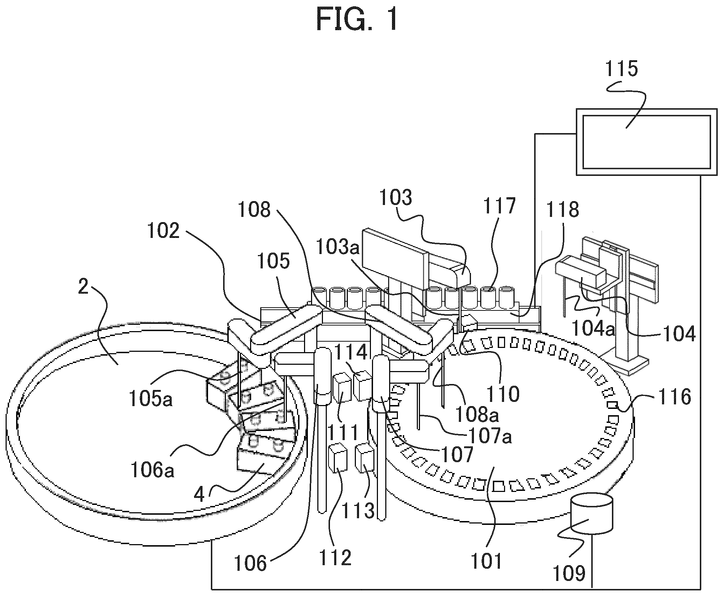

First, an automatic analyzer according to an embodiment of the present invention will be described using Fig. 1. Fig. 1 is a perspective view that shows the general configuration of the automatic analyzer according to the embodiment.

As shown in Fig. 1, the automatic analyzer according to the embodiment causes a sample and a reagent to react with each other in a reaction container 116 and measures a reacted reaction liquid. The automatic analyzer includes a reagent cool storage case 1 (in Fig. 1, a lid is omitted and only a reagent disk 2 is shown), a reaction disk 101, a sample transport mechanism 102, sample dispensing mechanisms 103 and 104, reagent dispensing mechanisms 105 to 108, a spectrophotometer 109, a stirring mechanism 110, cleaning tubs 111 to 114, and a controller 115 as main configurations.

The reagent cool storage case 1 includes the reagent disk 2 arranged therein, and an inner space thereof is cooled.

A plurality of reagent containers 4 containing reagents are placeable in a circumferential arrangement on the reagent disk 2.

A plurality of reaction containers 116 for containing a mixed liquid of the sample and the reagent are arranged in a circumferential shape on the reaction disk 101. The sample transport mechanism 102 that transports a sample rack 118 on which a sample container 117 is mounted is arranged in the vicinity of the reaction disk 101.

The sample dispensing mechanisms 103 and 104 capable of rotation and vertical movement are arranged between the reaction disk 101 and the sample transport mechanism 102, and include sample dispensing probes 103a and 104a, respectively. A sample syringe (not shown) is connected to each of the sample dispensing probes 103a and 104a. The sample dispensing probes 103a and 104a move horizontally along an arc around a rotating shaft, move vertically, and dispense the sample from the sample container 117 into the reaction container 116.

The reagent dispensing mechanisms 105 to 108 capable of rotation and vertical movement are provided between the reaction disk 101 and the reagent disk 2, and include reagent dispensing probes 105a to 108a, respectively. The reagent dispensing probes 105a to 108a are vertically and horizontally moved by the reagent dispensing mechanisms 105 to 108. A reagent syringe (not shown) is connected to each of the reagent dispensing probes 105a to 108a. By the reagent syringe, a reagent, a detergent, a diluent, a pretreatment reagent, and the like aspirated from the reagent container 4 via the reagent dispensing probes 105a to 108a are dispensed into the reaction container 116.

In the periphery of the reaction disk 101, the spectrophotometer 109 for measuring an absorbance of light transmitted through the mixed liquid in the reaction container 116, the stirring mechanism 1110 that mixes the sample and the reagent dispensed into the reaction container 116, a cleaning mechanism (not shown) that cleans inside of the reaction container 116, and the like are arranged. The cleaning tubs 111 to 114 are arranged on operating ranges of the reagent dispensing mechanisms 105 to 108 for the reagent dispensing probes 105a to 108a, respectively.

Each of the mechanisms is connected to the controller 115, and the operation of the mechanism is controlled by the controller 115. The controller 115 as a control unit is configured by a computer or the like, controls the operation of each of the above-described mechanisms in the automatic analyzer, and executes a calculation process of acquiring a concentration of a predetermined component in a liquid sample such as blood or urine.

Next, the summary of an overall flow of analysis by the automatic analyzer according to the embodiment will be described. First, the sample in the sample container 117 placed on the sample rack 118 transported to the vicinity of the reaction disk 101 by the sample transport mechanism 102 is dispensed into the reaction container 116 on the reaction disk 101 by the sample dispensing probes 103a and 104a of the sample dispensing mechanisms 103 and 104. Next, the reagent dispensing mechanisms 105 to 108 cause the reagent dispensing probes 105a to 108a to dispense the reagent used for analysis from the reagent container 4 on the reagent disk 2 into the reaction container 116 into which the sample is dispensed in advance. Next, the stirring mechanism 110 stirs the mixed liquid of the sample and the reagent in the reaction container 116.

Next, light emitted from a light source is transmitted through the reaction container 116 containing the mixed liquid such that a light intensity of the transmitted light is measured by the spectrophotometer 109. The light intensity measured by the spectrophotometer 109 is transmitted to the controller 115 via an A/D converter and an interface. The controller 115 executes calculation to acquire the concentration of a predetermined component in the liquid sample such as blood or urine, and causes a display unit (not shown) or the like to display the result. In the present specification, the automatic analyzer that acquires the concentration of a predetermined component using the spectrophotometer 109 is described as the example. However, the technique disclosed in the present specification may be used for an automatic immunoassay analyzer or an automated coagulation analyzer that measures a sample using other photometers.

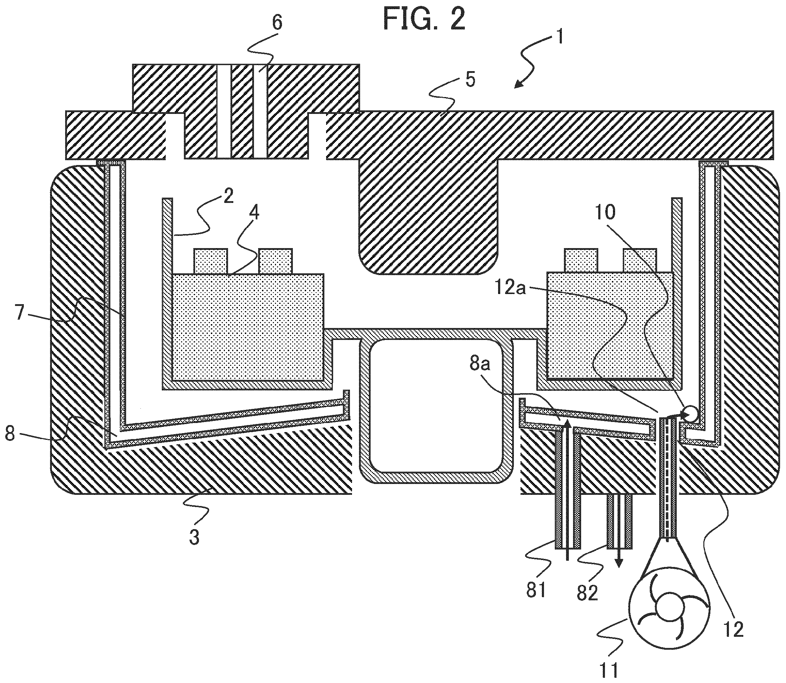

Next, the structure of the reagent cool storage case 1 will be described using Fig. 2. Fig. 2 is a vertical sectional view that schematically shows the structure of the reagent cool storage case according to the embodiment. The reagent cool storage case 1 has a cylindrical shape as a whole, and an inner space thereof includes the reagent disk 2 having a circular shape in a vertical projection view (plan view) and rotatable by a motor (not shown). A plurality of reagent containers 4 are provided on the reagent disk 2 to radially draw a circle.

Outside portions of a bottom surface and a side surface of the reagent cool storage case 1 are surrounded by a heat insulating material 3, and a lid 5 covers an upper side. That is, the reagent cool storage case 1 has a structure in which heat in the storage case is not likely to escape to outside and the reagent container 4 can be efficiently cooled. It is desirable that the heat insulating material 3 is formed of a material having a low thermal conductivity represented by foamed polystyrene or foamed polyurethane.

In the heat insulating material 3, a cooling water flow path 8 that supplies cooling water to outside an inner wall 7 comparting an inner space for housing the reagent container 4 and cools the inner wall 7 is provided. The inner wall 7 in the embodiment is the same as an inner wall surface in a double wall forming the cooling water flow path 8, but the inner wall surface may be configured by another wall surface further inside of the inner wall surface of the cooling water flow path 8. The reagent container 4 is cooled by coldness of the cooled inner wall 7 transmitted by convection or radiation via air in the inner space.

A cooling water inflow hole 8a is formed at a specified position of a lower surface of the cooling water flow path 8 located under the bottom surface of the inner space, and a cooling water supply pipe 81 is connected to the cooling water inflow hole 8a. Meanwhile, a cooling water discharge hole (not shown) is formed at another specified position of the lower surface of the cooling water flow path 8 located under the bottom surface of the inner space, and a cooling water discharge pipe 82 is connected to the cooling water discharge hole.

The cooling water supply pipe 81 and the cooling water discharge pipe 82 penetrate the heat insulating material 3 on the bottom surface of the reagent cool storage case 1, and is connected to a cooling water circulation device (not shown) .

The cooling water flow path 8 located under the bottom surface of the inner wall 7, that is, under the bottom surface of the inner space, is tilted such that an outer diameter side is lower than an inner diameter side. Therefore, dew condensation water generated in the inner space is likely to flow along the bottom surface of the inner wall 7 toward the outer diameter side due to gravity. An upper opening 12a of a drain 12 from which dew condensation water is discharged is formed at a low position on the outer diameter side of the inner wall 7.

The upper opening 12a is formed at the upper end side of the drain 12 that is a position connected to the bottom surface of the inner wall 7, and has a larger hole diameter than the hole diameter of a main body of the drain 12. A slope is formed such that the hole diameter gradually decreases from the upper opening 12a, and is connected to the main body of the drain 12. Therefore, dew condensation water in the vicinity of a drain 18 on the bottom surface of the inner wall 7 is likely to be guided to the drain 12. When the shape of the bottom surface of the inner wall 7 is tilted such that only one point of the upper opening 12a of the drain 12 is the lowest portion, dew condensation water is not likely to remain in a place other than the upper opening 12a.

A reagent aspiration hole 6 through which the reagent dispensing probes 105a to 108a can pass is formed on the lid 5. When the reagent in a predetermined reagent container 4 is aspirated, the reagent container 4 is positioned under a vertical projection of the reagent aspiration hole 6 by rotation of the reagent disk 2. Then, the reagent dispensing probes 105a to 108a aspirate the reagent from the reagent container 4 via the reagent aspiration hole 6. Note that, when hot and humid external air flows into the inner space of the reagent cool storage case 1 from the reagent aspiration hole 6, moisture in the external air is cooled and condensed in the inner space. Accordingly, an air flow path that supplies air to inside the inner wall 7 and makes the inner space have a positive pressure is provided in the reagent cool storage case 1 such that the inflow of external air from the reagent aspiration hole 6 is suppressed.

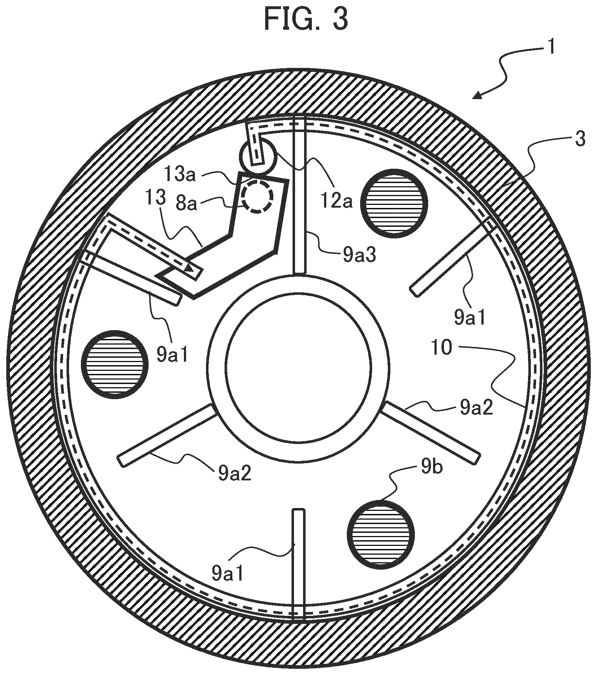

The air flow path includes a pipe 10 and a dew condensation promotion area 13 (refer to Fig. 3 or the like) connected to a downstream side of the pipe. The pipe 10 penetrates the heat insulating material 3 and the inner wall 7 (cooling water flow path 8) comparting the bottom surface of the inner space from under the heat insulating material 3, and is drawn into the inner space and arranged in contact with the bottom surface and the side surface of the inner wall 7. A blower 11 is provided at an upstream side of the pipe 10, and external air is supplied into the pipe 10.

When flowing through the pipe 10 and the dew condensation promotion area 13, the external air supplied into the pipe 10 is cooled by the coldness of the cooling water flowing through the cooling water flow path 8 on the outside of the inner wall 7, and moisture in the external air is condensed. Therefore, dried air and dew condensation water are discharged from a discharge opening 13a (refer to Fig. 3 or the like) formed downstream of the dew condensation promotion area 13 by air blown from the blower 11. The dew condensation water discharged from the discharge opening 13a is discharged from the above-described upper opening 12a to the drain 12. In particular, when the above-described pipe 10 is drawn into the inner space, the pipe 10 passes through the inner diameter side of the drain 12, thereby advantageous in that another through hole does not need to be provided in the inner wall 7.

Here, specific structures for efficiently cooling air and efficiently condensing moisture in the air particularly in the dew condensation promotion area 13 in the air flow path and the effects thereof will be described below using first to third embodiments as examples.

### First Embodiment

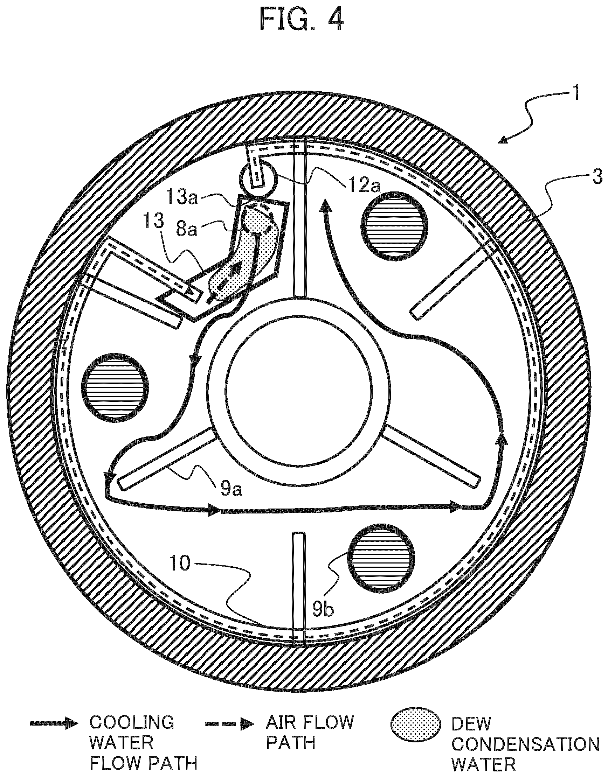

A reagent cool storage case according to a first embodiment will be described using Figs. 3 and 4. Fig. 3 is a horizontal sectional view that schematically shows the structure of the reagent cool storage case according to the first embodiment, and Fig. 4 is a horizontal sectional view that shows flows of cooling water and air and how dew condensation occurs, according to the first embodiment.

First, details of the structure of the cooling water flow path 8 will be described. The cooling water supplied from the cooling water supply pipe 81 flows from the cooling water inflow hole 8a to the cooling water flow path 8. In the cooling water flow path 8 located under the bottom surface along the bottom surface of the inner space, a plurality of partition members 9a extending in a radial direction of the reagent cool storage case 1 are radially provided. Specifically, as shown in Fig. 3, a first partition member 9a1 that forms a clearance with an inner circumferential wall on the inner diameter side and a second partition member 9a2 that forms a clearance with an outer circumferential wall on the outer diameter side are alternately provided in the circumferential direction, and only a third partition member 9a3 adjacent to the cooling water inflow hole 8a extends in the entire area in the radial direction. Therefore, as indicated by a solid line arrow of Fig. 4, the cooling water in the cooling water flow path 8 flows from the cooling water inflow hole 8a to a side opposite to the third partition member 9a3, substantially travels around the circumference while meandering, and is discharged from the cooling water discharge hole (not shown) . As a result, the cooling water can cool the bottom surface of the inner wall 7 uniformly as a whole. The cooling water flowing from the cooling water inflow hole 8a into the cooling water flow path 8 also flows into the cooling water flow path 8 located on the side surface of the inner space and cools the side surface of the inner wall 7.

In the cooling water flow path 8, a plurality of protrusions 9b are also provided beside the partition members 9a.

In the protrusion 9b, a screw hole is formed from below, and a screw used when fixing the reagent cool storage case 1 to an installation table is inserted into the screw hole. By providing the protrusions 9b between the plurality of partition members 9a, the flow of the cooling water in the cooling water flow path 8 can further meander and also be guided to a desired area. The shape or the arrangement of the partition members 9a and the protrusions 9b are not particularly limited, and a common shape may be adopted as long as a water flow limiting convex part that limits the flow of the cooling water is formed.

Next, details of the structure of the pipe 10 in the air flow path will be described. As described above, the pipe 10 passes through the inner diameter side of the drain 12, is drawn into the inner space from the upper opening 12a, and is arranged in contact with the bottom surface and the side surface of the inner wall 7. It is desirable that a material of the pipe is, for example, a material having a high thermal conductivity represented by copper or aluminum such that the pipe is easily directly cooled by the cooling water via the inner wall 7.

As a length of the flow path of the external air flowing through the inside of the pipe 10 increases, a contact time and a contact area of the pipe 10 and the external air increase. Therefore, a temperature of the external air decreases when the external air is discharged to the inner space. That is, to prevent dew condensation from occurring on the reagent container 4 or the reagent disk 2, it is desirable to design the flow path length of the pipe 10 such that the temperature of the air emitted from the discharge opening 13a is lower than temperatures of the reagent disk 2 and the reagent container 4. In the present embodiment, the pipe 10 substantially travels around an outer diameter side end of the inner space along the side surface of the inner wall 7, and a long flow path is ensured. Therefore, even in the water-cooled reagent cool storage case, the external air can be cooled to some extent.

Note that, as the length of the flow path of the pipe 10 increases, a pressure loss increases. Therefore, it is desirable that the blower 11 used when blowing air can blow the air in an environment where the pressure loss is high. For example, a diaphragm pump, a centrifugal fan, or a piezoelectric fan is used. To prevent dust or bacteria from penetrating into the reagent cool storage case 1, a filter or the like may be provided before introducing external air.

Next, details of the structure of the dew condensation promotion area 13 in the air flow path will be described. As described above, even in the pipe 10, external air is cooled and moisture in the external air is condensed. However, since the reagent cool storage case 1 is the water-cooled reagent cool storage case using cooling water, cooling and drying of external air is not sufficient. Accordingly, in the present embodiment, the dew condensation promotion area 13 surrounded by the cover that covers the upper surface side of the inner wall 7 comparting the bottom surface of the inner space is connected to the downstream side of the pipe 10.

The dew condensation promotion area 13 is formed by the upper surface of the inner wall 7, the metal cover, and an elastic member that connects an edge of a lower surface of the cover to the upper surface of the inner wall 7. As the material of the inner wall 7 (cooling water flow path 8), a material having relatively low thermal conductivity such as stainless steel or resin can also be used. However, it is desirable to use a material having high thermal conductivity represented by copper or aluminum. The periphery of the vertical projection view of the dew condensation promotion area 13 is closed by the cover pressing the elastic member. Therefore, dew condensation water can be prevented from leaking out of the dew condensation promotion area 13.

The dew condensation promotion area 13 is curved from an upstream side to a downstream side in the vertical projection view. As long as the shape is curved, the dew condensation promotion area 13 may have a shape folded halfway or a shape drawing an arc. It is desirable that the discharge opening 13a formed downstream of the dew condensation promotion area 13 is not coaxial with a downstream end of the pipe 10, and specifically forms an angle of 30 degrees or more and 90 degrees or less. Accordingly, the length of the flow path in the dew condensation promotion area 13 increases, convection in the dew condensation promotion area 13 is promoted, and the air flowing into the dew condensation promotion area 13 from the pipe 10 is cooled to the dew point or lower. Therefore, dew condensation of moisture in the air is also promoted. When a cross-section area of the discharge opening 13a is smaller than a cross-section area of the downstream end of the pipe 10, the air is hardly discharged from the dew condensation promotion area 13. Therefore, cooling and dew condensation in the dew condensation promotion area 13 is further promoted. The cross-sectional shapes of the discharge opening 13a and the pipe 10 are, for example, circular, and may be rectangular or trapezoidal. The discharge opening 13a is formed toward the upper opening 12a of the drain 12. Therefore, the dew condensation water discharged from the discharge opening 13a is immediately discharged without remaining in the inner space.

It is desirable that the discharge opening 13a forms an angle of 45 degrees or more and 80 degrees or less with the side surface of the inner wall 7. That is, a straight line extending in an axis direction of the discharge opening 13a and a tangent at an intersection of the straight line and the inner wall 7 desirably forms an angle of 45 degrees or more and 80 degrees or less. As such, by discharging air in a direction tilted in the vertical projection view from the dew condensation promotion area 13 to the inner wall 7, the discharged air flows to swirl along the inner wall 7, and efficiently circulates in the inner space. Therefore, a temperature gradient in the inner wall 7 decreases, and dew condensation in the inner space is suppressed.

Here, the cooling water supplied to the cooling water flow path 8 has the lowest temperature in the vicinity of the cooling water inflow hole 8a. Accordingly, in the present embodiment, a portion of the dew condensation promotion area 13 formed on the upper surface of the inner wall 7 comparting the bottom surface of the inner space is positioned on the vertical projection of the cooling water inflow hole 8a. As a result, cooling and dew condensation of the air in the dew condensation promotion area 13 is further promoted as compared to the air in the pipe 10. In the present embodiment, all the vertical projection of the cooling water inflow hole 8a is within an area of the vertical projection of the dew condensation promotion area 13. Therefore, the effect of promoting cooling and dew condensation is further improved.

According to the present embodiment, even in the water-cooled reagent cool storage case using cooling water, external air can be efficiently cooled and dried before being discharged to the inner space, and when the external air is discharged to the inner space, the temperature of the external air can be made to be lower than the surface temperature of the reagent container 4, the reagent disk 2, or the inner wall 7. As a result, occurrence of dew condensation in the reagent cool storage case 1 can be prevented.

### Second Embodiment

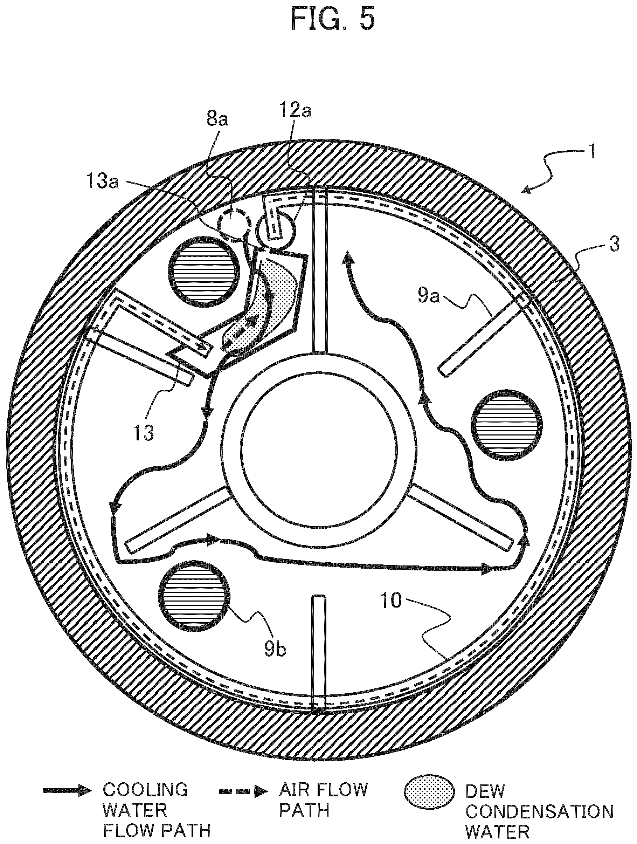

A reagent cool storage case according to a second embodiment will be described using Fig. 5. Fig. 5 is a horizontal sectional view that shows flows of cooling water and air and how dew condensation occurs, according to the second embodiment. The second embodiment is different from the first embodiment in that the dew condensation promotion area 13 is not on the vertical projection of the cooling water inflow hole 8a.

In the cooling water flow path 8 according to the present embodiment, a plurality of water flow limiting convex parts such as the partition members 9a or the protrusions 9b are provided as in the first embodiment. Unlike the first embodiment, the protrusions 9b are also provided at positions adjacent to the cooling water inflow hole 8a similarly to the partition members 9a. Therefore, two water flow limiting convex parts adjacent to the cooling water inflow hole 8a form a cooling water guiding area that narrows a flow path width of the cooling water immediately after flowing into the cooling water flow path 8. In the cooling water guiding area, cooling water having a relatively low temperature locally flows. Accordingly, in the present embodiment, at least a portion of the dew condensation promotion area 13 formed on the upper surface of the inner wall 7 comparting the bottom surface of the inner space is positioned on the vertical projection of the cooling water guiding area. As a result, cooling and dew condensation of air in the dew condensation promotion area 13 is further promoted as compared to air in the pipe 10. The cooling water flowing through the cooling water guiding area is oriented substantially opposite to the air flowing through the dew condensation promotion area 13 on the vertical projection of the cooling water guiding area. Further, the flow path width in the cooling water guiding area is narrow, and the flow rate of the cooling water is also increased. Therefore, heat exchange between the cooling water and the air is further promoted.

According to the present embodiment, as in the first embodiment, external air can be efficiently cooled and dried in the dew condensation promotion area 13 before being discharged to the inner space, and dew condensation in an unintended place can be suppressed.

### Third Embodiment

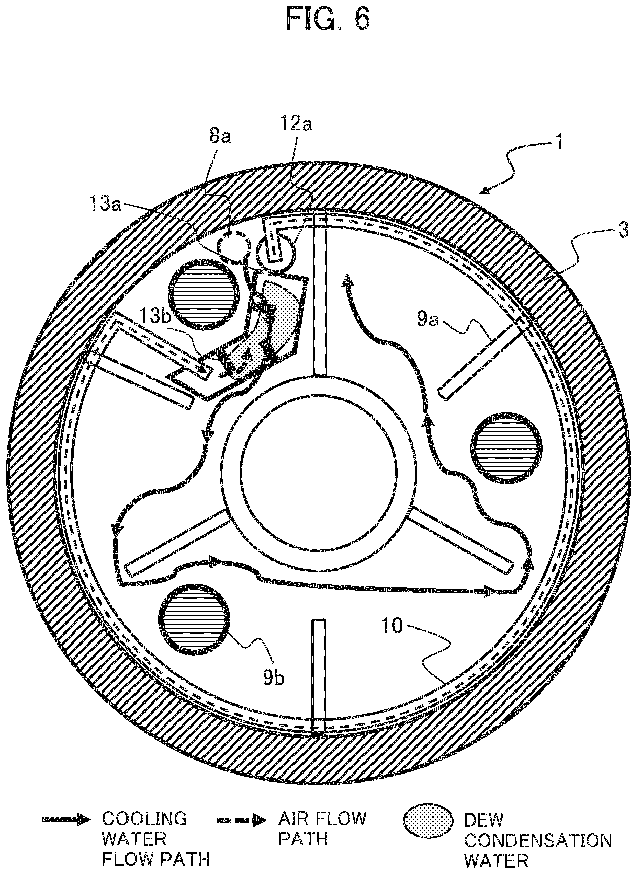

A reagent cool storage case according to a third embodiment will be described using Fig. 6. Fig. 6 is a horizontal sectional view that shows flows of cooling water and air and how dew condensation occurs, according to the third embodiment. The structure of the cooling water flow path 8 according to the third embodiment is the same as that of the second embodiment. The third embodiment is different from the second embodiment in that a plurality of air flow limiting convex parts 13b that limit a flow of air are formed in the dew condensation promotion area 13.

The air flow limiting convex parts 13b extending from one side surface to another side surface of both side surfaces comparting the flow path in the dew condensation promotion area 13 and the air flow limiting convex parts 13b extending from the other side surface to the one side surface are alternately formed to be shifted from each other. The air flow limiting convex part 13b extending from the one side surface to the other side surface has a clearance with the other side surface, and the air flow limiting convex part 13b extending from the other side surface to the one side surface has a clearance with the one side surface. Each of the air flow limiting convex parts 13b has an upper end in contact with the above-described cover and has a lower end in contact with the cooling water flow path 8 that is the inner wall 7.

According to the present embodiment, a moving distance of air in the dew condensation promotion area 13 increases. Therefore, external air can be more efficiently cooled and dried as compared to the second embodiment, and the effect of suppressing dew condensation is improved. In the present embodiment, the air flow limiting convex parts 13b are provided in the dew condensation promotion area 13 assuming that the structure of the reagent cool storage case 1 follows that of the second embodiment. However, the air flow limiting convex parts 13b may be provided in the dew condensation promotion area 13 assuming that the structure of the reagent storage follows that of the first embodiment.

The present invention is not limited to each of the embodiments described above and includes various modification examples. For example, in each of the embodiments, the air flow path includes the pipe 10 and the dew condensation promotion area 13. However, the air flow path may include only the pipe 10. Here, a portion (downstream side) of the pipe 10 is positioned on the vertical projection of the cooling water inflow hole 8a or the cooling water guiding area. A part of the configuration of one embodiment can be replaced with the configuration of another embodiment. The configuration of one embodiment can be added to the configuration of another embodiment. Addition, deletion, and replacement of another configuration can also be made for a part of the configuration of each of the embodiments.

### Reference Signs List

1... reagent cool storage case,
2... reagent disk,
3... heat insulating material,
4... reagent container,
5... lid,
6... reagent aspiration hole,
7... inner wall,
8... cooling water flow path,
8a... cooling water inflow hole,
9a... partition member,
9a1... first partition member,
9a2... second partition member,
9a3... third partition member,
9b... protrusion,
10... pipe,
11... blower,
12... drain,
12a... upper opening,
13... dew condensation promotion area,
13a... discharge opening,
81... cooling water supply pipe,
82... cooling water discharge pipe,
101... reaction disk,
102... sample transport mechanism,
103, 104... sample dispensing mechanism,
103a, 104a... sample dispensing probe,
105-108... reagent dispensing mechanism,
105a-108a... reagent dispensing probe,
109... spectrophotometer,
110... stirring mechanism,
111-114... cleaning tub,
115... controller,
116... reaction container,
117... sample container,
118... sample rack

## Claims

1. An automatic analyzer with a reagent cool storage case that cools a reagent,
the reagent cool storage case comprising:
a cooling water flow path that supplies cooling water to outside an inner wall comparting a space for housing a reagent container and cools the inner wall; and
an air flow path that supplies air to inside the inner wall and makes the space have a positive pressure, wherein
a cooling water inflow hole is formed at a specified position of a lower surface of the cooling water flow path located under a bottom surface of the space, and
a portion of the air flow path located on an upper surface of the inner wall comparting the bottom surface of the space is positioned on a vertical projection of the cooling water inflow hole.

2. The automatic analyzer according to Claim 1,
the air flow path comprising:
a pipe that penetrates the inner wall comparting the bottom surface of the space and is drawn into the space and positioned in contact with the bottom surface or a side surface of the inner wall; and
a dew condensation promotion area that is connected to a downstream side of the pipe, wherein
a discharge opening for air and dew condensation water is formed downstream of the dew condensation promotion area, and
a portion of the dew condensation promotion area is positioned on the vertical projection of the cooling water inflow hole.

3. The automatic analyzer according to Claim 2, wherein the dew condensation promotion area is surrounded by a cover covering an upper surface side of the inner wall comparting the bottom surface of the space.

4. The automatic analyzer according to Claim 3, wherein all the vertical projection of the cooling water inflow hole is within a range of a vertical projection of the dew condensation promotion area.

5. An automatic analyzer with a reagent cool storage case that cools a reagent,
the reagent cool storage case comprising:
a cooling water flow path that supplies cooling water to outside an inner wall comparting a space for housing a reagent container and cools the inner wall; and
an air flow path that supplies air to inside the inner wall and makes the space have a positive pressure, wherein
the cooling water flow path located under a bottom surface of the space includes a cooling water inflow hole and a water flow limiting convex part that limits a flow of the cooling water,
the plurality of water flow limiting convex parts adjacent to the cooling water inflow hole form a cooling water guiding area that narrows a width of the cooling water flow path, and
a portion of the air flow path located on an upper surface of the inner wall comparting the bottom surface of the space is positioned on a vertical projection of the cooling water guiding area.

6. The automatic analyzer according to Claim 5,
the air flow path comprising:
a pipe that penetrates the inner wall comparting the bottom surface of the space and is drawn into the space and positioned in contact with the bottom surface or a side surface of the inner wall; and
a dew condensation promotion area that is connected to a downstream side of the pipe, wherein
a discharge opening for air and dew condensation water is formed downstream of the dew condensation promotion area, and
at least a portion of the dew condensation promotion area is positioned on the vertical projection of the cooling water guiding area.

7. The automatic analyzer according to Claim 6, wherein the dew condensation promotion area is surrounded by a cover covering an upper surface side of the inner wall comparting the bottom surface of the space.

8. The automatic analyzer according to Claim 2 or 6, wherein the dew condensation promotion area is curved from an upstream side to a downstream side in a vertical projection view.

9. The automatic analyzer according to Claim 8, wherein the discharge opening is oriented with an angle of 30 degrees or more and 90 degrees or less with respect to a downstream end of the pipe.

10. The automatic analyzer according to Claim 2 or 6, wherein a cross-section area of the discharge opening is smaller than a cross-section area of a downstream end of the pipe.

11. The automatic analyzer according to Claim 3 or 7, wherein the dew condensation promotion area is constituted by the upper surface of the inner wall, the cover made of metal, and an elastic member that connects an edge of a lower surface of the cover and the upper surface of the inner wall.

12. The automatic analyzer according to Claim 2 or 6, wherein a plurality of air flow limiting convex parts that limit an air flow are formed in the dew condensation promotion area.

13. The automatic analyzer according to Claim 2 or 6, wherein
an upper opening of a drain that discharges dew condensation water generated in the space is formed in the inner wall comparting the bottom surface of the space, and
the discharge opening is formed toward the upper opening of the drain.

14. The automatic analyzer according to Claim 2 or 6, wherein the discharge opening is oriented with an angle of 45 degrees or more and 80 degrees or less with respect to the side surface of the inner wall.

15. The automatic analyzer according to Claim 1 or 5, wherein the inner wall is formed by the cooling water flow path.
